# FASCICULE DE BREVET EUROPEEN

(11) **EP 2 379 971 B1**
(45) Date de publication et mention de la délivrance du brevet: **12.02.2014**
(21) Numéro de dépôt: 09803851.6
(22) Date de dépôt: 14.12.2009
(51) Int. Cl.: F25J 3/02, F25J 3/04, F25J 3/06, B01D 53/62, C10L 3/10

(54) **PROCÉDÉ DE CAPTURE DU CO2 ET DE PRODUCTION D'EAU FROIDE**
CO2-GEWINNUNGS- UND KALTWASSERERZEUGUNGSVERFAHREN
CO2 RECOVERY AND COLD WATER PRODUCTION METHOD

(30) Priorité: 19.12.2008 FR 0858866
(43) Date de publication de la demande: 26.10.2011
(73) Titulaire: L'AIR LIQUIDE, Société Anonyme pour l'Etude et l'Exploitation des Procédés Georges Claude, 75007 Paris (FR)
(72) Inventeur: LOCKWOOD, Frédérick, F-75010 Paris (FR); RAVEX, Alain, F-38240 Meylan (FR); TRANIER, Jean-Pierre, F-94240 L'hay-les-roses (FR); BOURHY-WEBER, Claire, F-92150 Suresnes (FR)
(74) Mandataire: Mercey, Fiona Susan
(86) Numéro de dépôt international: PCT/FR2009/052509
(87) Numéro de publication internationale: WO 2010/076467

(56) Documents cités:
- WO-A1-2006/072753
- FR-A- 1 132 044
- FR-A- 2 894 838
- US-A- 3 614 872

## Description

La présente invention concerne un procédé de production d'eau réfrigérée, d'au moins un gaz pauvre en CO₂ et d'un ou plusieurs fluides primaires enrichis en CO₂ à partir d'un fluide à traiter comprenant du CO₂ et au moins un composé plus volatil que le CO₂ et d'eau industrielle.

L'invention peut s'appliquer notamment aux unités de production d'électricité et/ou de vapeur à partir de combustibles carbonés tels que le charbon, les hydrocarbures (gaz naturel, fuel, résidus pétroliers...), les ordures ménagères, la biomasse mais aussi à des gaz de raffineries, d'usines chimiques, d'usines sidérurgiques ou de cimenteries, au traitement du gaz naturel en sortie de puits de production. Elle pourrait aussi s'appliquer aux fumées de chaudières servant au chauffage de bâtiments, voire au gaz d'échappement de véhicules de transport, plus généralement à tout processus industriel générant des fumées comprenant du CO₂.

Le dioxyde de carbone est un gaz à effet de serre. Pour des raisons environnementales et/ou économiques, on souhaite de plus en plus réduire, voire annuler, les rejets de CO₂ dans l'atmosphère, en le capturant, puis par exemple, en le stockant dans des couches géologiques appropriées ou en le valorisant en tant que produit.

On connaît un certain nombre de techniques permettant de capturer le dioxyde de carbone, par exemple des procédés fondés sur des lavages des fluides avec des solutions de composés qui séparent le CO₂ par réaction chimique, par exemple lavage à l'aide de MEA. Ces procédés comportent typiquement les inconvénients suivants :
- consommation d'énergie élevée (liée à la régénération du composé qui réagit avec le CO₂),
- dégradation du composé réagissant avec le dioxyde de carbone,
- corrosion due au composé réagissant avec le dioxyde de carbone.

Dans le domaine de la cryo-condensation, c'est à dire le refroidissement jusqu'à l'apparition de CO₂ solide, citons le document FR-A-2820052 qui divulgue un procédé permettant l'extraction du CO₂ par anti-sublimation, c'est à dire solidification à partir d'un gaz sans passage par l'état liquide. Le froid nécessaire est apporté au moyen d'une distillation fractionnée de fluides frigorigènes. Ce procédé est très gourmand en énergie.

Le document FR-A-2894838 divulgue le même type de procédé, avec un recyclage d'une partie du CO₂ liquide produit. Le froid peut être fourni par la vaporisation de GNL (gaz naturel liquéfié). Cette synergie réduit la consommation énergétique spécifique du procédé, qui reste malgré tout élevée, et nécessite un terminal GNL.

Le préambule de la revendication est basé sur ce document. Ici, le gaz pauvre en CO₂ sert à pré-refroidir les fumées à traiter.

Le document US-A-3614872 décrit un procédé de séparation où la détente adiabatique et isentropique du dioxyde de carbone fournit un fluide réfrigérant.

WO-A-2006/072753 décrit un procédé selon le préambule de la revendication 1 où de l'air est refroidi par échange direct avec de l'eau à pH élevé pour produire de l'eau enrichi en CO₂, l'eau étant ensuite refroidi par échange de chaleur avec de l'azote produit par distillation de l'air refroidi.

Un but de la présente invention est de proposer un procédé amélioré de capture du dioxyde de carbone à partir d'un fluide comprenant du CO₂ et au moins un composé plus volatil que celui-ci.

L'invention concerne d'abord un procédé selon la revendication 1.

Le fluide à traiter provient en général d'une chaudière ou de toute installation produisant des fumées. Ces fumées peuvent avoir subi plusieurs pré-traitements, notamment pour enlever les NOx (oxydes d'azote), les poussières, les SOx (oxydes de soufre) et/ou l'eau.

Avant la séparation, le fluide à traiter est soit monophasique, sous forme gazeuse ou liquide, soit polyphasique. Par forme « gazeuse », il faut entendre « essentiellement gazeux », c'est-à-dire qu'il peut contenir notamment des poussières, des particules solides telles que des suies et/ou des gouttelettes de liquide.

Le fluide à traiter contient du CO₂ que l'on souhaite séparer par cryo-condensation des autres constituants dudit fluide. Ces autres constituants comprennent au moins un ou plusieurs composés plus volatils que le dioxyde de carbone au sens de la condensation, par exemple le méthane CH4, l'oxygène O₂, l'argon Ar, l'azote N₂, le monoxyde de carbone CO, l'hélium He et/ou l'hydrogène H₂. Les fluides à traiter comprennent en général majoritairement de l'azote, ou majoritairement du CO ou majoritairement de l'hydrogène.

A l'étape a) on sépare le fluide à traiter en au moins un gaz pauvre en CO₂ et un ou plusieurs fluides primaires riches en CO₂ par des méthodes connues de l'homme du métier. Par exemple, il peut s'agir d'un procédé de séparation par cryo-condensation solide du CO₂ à basse température.

A l'étape b), le gaz pauvre en CO₂ produit à l'étape a) est mis en contact direct avec un ou plusieurs flux d'eau industrielle. Ce contact entre un gaz non saturé en eau et de l'eau provoque la vaporisation d'une partie de la dite eau industrielle. La chaleur de vaporisation de cette eau ainsi que le réchauffement éventuel du gaz pauvre en CO₂ servent à refroidir l'eau non vaporisée.
Une tour a contact direct peut consister simplement en un système de spray de manière à former des gouttelettes d'eau qui sous l'action de la gravité vont descendre à contre-courant du gaz pauvre en CO₂. Pour augmenter la performance de la tour à contact direct, on peut aussi utiliser des contacteurs gaz-liquide de type plateaux ou garnissages (vrac ou structurés).

Selon le cas, le procédé selon l'invention peut comprendre l'une ou plusieurs des caractéristiques suivantes :
- le procédé comporte en outre une étape c) où on réalise un échange de chaleur entre une fraction non-nulle dudit fluide à traiter et une fraction non-nulle de l'eau réfrigérée produite à l'étape b), de manière à refroidir ledit fluide à traiter préalablement à sa mise en oeuvre à l'étape a).
- à l'étape c), ledit échange de chaleur se fait par contact direct de manière similaire au contact direct réalisé à l'étape b), c'est-à-dire dans une tour à contact direct, par exemple avec spray et/ou dans des garnissages (vrac ou structurés).
- le procédé comprend en outre une étape c0) où ledit fluide à traiter, préalablement à sa mise en oeuvre à l'étape c), est refroidi par contact direct avec un flux d'eau ayant une température supérieure à la température humide de l'air ambiant.
- le procédé comprend en outre une étape c0) où ledit fluide à traiter, préalablement à sa mise oeuvre à l'étape c), est refroidi par contact direct avec un flux d'eau ayant une température supérieure à, mais proche de la température humide de l'air. Cette température est encore appelée température du thermomètre mouillé (en anglais : *wet bulb temperature*).
- le procédé comprend en outre une étape b1) où de l'eau réfrigérée, produite à l'étape b), est refroidie dans un groupe frigorifique préalablement à sa mise en oeuvre à l'étape c).
- le procédé comprend en outre, postérieurement à sa mise en oeuvre à l'étape c) et préalablement à sa mise en oeuvre à l'étape a), une étape c1) de séchage dans une unité à adsorption et/ou de compression dudit fluide à traiter.
- à l'étape a), on produit un gaz pauvre en CO₂ non saturé en eau.
- l'étape a) est réalisée au moins partiellement à basse température, c'est-à-dire à une température inférieure à 0°C.
- l'étape a) est constituée des sous-étapes suivantes :
   a1) un premier refroidissement dudit fluide à traiter par échange de chaleur sans changement d'état ;
   a2) un second refroidissement d'au moins une partie dudit fluide à traiter refroidi à l'étape a) de manière à obtenir au moins un solide comprenant majoritairement du CO₂ et au moins ledit gaz pauvre en CO₂ ; et
   a3) une étape comprenant la liquéfaction et/ou la sublimation d'au moins une partie dudit solide (62) et permettant d'obtenir lesdits un ou plusieurs fluides primaires riches en CO₂ (66, 68, 70).

A l'étape a1) le fluide à traiter est d'abord refroidi sans changement d'état. Ce refroidissement peut avantageusement se faire au moins en partie par échange de chaleur avec des fluides riches en CO₂ issus du procédé de séparation. De manière complémentaire ou alternative, il peut avantageusement se faire au moins en partie par échange de chaleur avec le gaz pauvre en CO₂ issu du procédé de séparation. Ces fluides froids issus de la séparation sont réchauffés, tandis que le fluide à traiter est refroidi. Ceci permet de réduire la quantité d'énergie nécessaire à l'opération de refroidissement.

L'étape a2) consiste à solidifier du CO₂ initialement gazeux en portant le fluide à traiter à une température en dessous du point triple du CO₂, alors que la pression partielle du CO₂ dans le fluide à traiter est inférieure à celle du point triple du CO₂. Par exemple, la pression totale du fluide à traiter est proche de la pression atmosphérique. Cette opération de solidification est parfois appelée « cryo-condensation » ou « anti-sublimation » du CO₂ et par extension du fluide à traiter.

Certains composés plus volatils que le CO₂ ne se solidifient pas et restent à l'état gazeux. Avec le CO₂ non solidifié, ils vont constituer ledit gaz pauvre en CO₂, c'est à dire comprenant moins de 50% de CO₂ en volume et préférentiellement moins de 10% CO₂ en volume. Selon un mode particulier, ledit gaz pauvre en CO₂ comprend plus de 1% de CO₂ en volume. Selon un autre mode particulier, il en comporte plus de 2%. Selon un autre mode particulier, il en comporte plus de 5%. Il se forme un solide comprenant majoritairement du CO₂, c'est à dire au moins 90% en volume ramené à l'état gazeux, préférentiellement au moins 95% en volume et encore plus préférentiellement au moins 99% de CO₂ en volume.

Ce solide peut comporter d'autres composés que du CO₂. On peut citer par exemple d'autres composés qui se seraient également solidifiés, ou bien des bulles et/ou des gouttes de fluide prises en masse dans ledit solide. Ceci explique que le solide puisse ne pas être purement constitué de CO₂ solide. Ce « solide » peut comporter des parties non solides telles que des inclusions fluides (gouttes, bulles, etc.).

Ce solide est ensuite isolé des composés non solidifiés après la cryo-condensation et récupéré. Puis, à l'étape a3), il est ramené à des conditions de température et de pression telles qu'il passe à un état fluide, liquide et/ou gazeux. Il peut donc se produire une liquéfaction d'au moins une partie dudit solide. Celui-ci donne ainsi naissance à un ou plusieurs un fluides primaires riches en CO₂. Ces fluides sont dits « primaires » pour les distinguer de fluides procédé qui sont dits « secondaires ». Par « riche en CO₂ », il faut entendre « comprenant majoritairement du CO₂ » au sens défini ci-dessus.

Les inventeurs ont montré qu'il est particulièrement intéressant de réaliser le premier et/ou le second refroidissement du fluide à traiter grâce à un ou plusieurs cycles frigorifiques comprenant chacun au moins une détente quasi isentropique d'un gaz. Ces cycles frigorifiques sont constitués de plusieurs étapes qui font passer un fluide dit « de travail » par plusieurs états physiques caractérisés par des conditions données de composition, température, pression... La présence, parmi les étapes du cycle, d'au moins une détente quasi isentropique, c'est à dire faisant augmenter l'entropie du fluide détendu de moins de 25%, préférentiellement moins de 15% et encore plus préférentiellement moins de 10%, permet d'améliorer la consommation d'énergie du procédé de séparation.

Pour fournir une autre partie du froid nécessaire pour réaliser les premiers et/ou seconds refroidissements, on peut avoir recours à un ou plusieurs cycles comportant une détente non quasi isentropique d'un fluide, par exemple des cycles de Rankine inversé. Ils sont dits inversés car utilisés en cycles frigorifiques. Leur intérêt, comme complément aux cycles frigorifiques avec détente quasi isentropique, est de ne pas nécessiter une grande quantité de fluide de travail. En revanche, ils sont moins efficaces énergétiquement.

Selon un mode de réalisation, certaines des détentes quasi isentropiques du ou des cycles frigorifiques fournissent du travail. Elles sont par exemple réalisées par introduction du fluide de travail dans une turbine.

Les fluides de travail peuvent être de différente nature. Selon différents modes de réalisation, ces fluides peuvent comprendre de l'azote et/ou de l'argon. Ils peuvent aussi comprendre tout ou partie du gaz pauvre en CO₂ obtenu ou du fluide à traiter. Ces fluides peuvent être mélangés avec d'autres fluides ou avoir subi des étapes intermédiaires de compression, détente, etc.

Lorsque le fluide de travail du cycle frigorifique comprend tout ou partie du fluide à traiter, la ou les détentes quasi isentropiques sans fourniture de travail extérieur peuvent donner lieu à un refroidissement du fluide de travail tel que du CO₂ solide apparaît. Ceci peut constituer tout ou partie du deuxième refroidissement du fluide à traiter. Selon un mode particulier de réalisation, ces détentes quasi isentropiques sont effectuées à travers un Venturi (un col avec effet Venturi).

La mise en rotation du fluide dont il question ci-dessus peut être obtenue par tout moyen classique, par exemple par des ailettes convenablement orientées. La mise en vitesse a lieu par effet Venturi. La température du fluide de travail baisse. Des particules solides de CO₂ apparaissent. Le fluide a un mouvement de rotation autour d'un axe sensiblement parallèle au sens de l'écoulement, comme une vrille. Ceci crée un effet centrifuge permettant de récupérer ces particules solides en périphérie de l'écoulement.

Selon un mode de réalisation préféré, le travail éventuellement produit par la ou les détentes quasi isentropiques sert en partie à comprimer des fluides dans d'autres étapes du procédé.

L'invention concerne aussi le procédé appliqué à des fumées industrielles dans un but de capture de CO₂.

Selon un mode particulier, ces fumées sont issues d'une usine de production d'énergie (vapeur, électricité) et peuvent avoir subi des pré-traitements.

D'autres particularités et avantages apparaîtront à la lecture de la description ci-après, faite en référence aux figures dans lesquelles :
- la figure 1 représente schématiquement une installation mettant en oeuvre un procédé conforme à l'invention, avec un cycle frigorifique mettant en oeuvre un fluide auxiliaire comme fluide de travail,
- la figure 13 représente schématiquement une installation mettant en oeuvre un procédé conforme à l'invention, avec d'une part un cycle de production d'énergie utilisant le froid de la fusion du CO₂ solide et d'autre part des purifications additionnelles par distillation des composés moins volatils que le CO₂, puis des composés plus volatils que le CO₂,

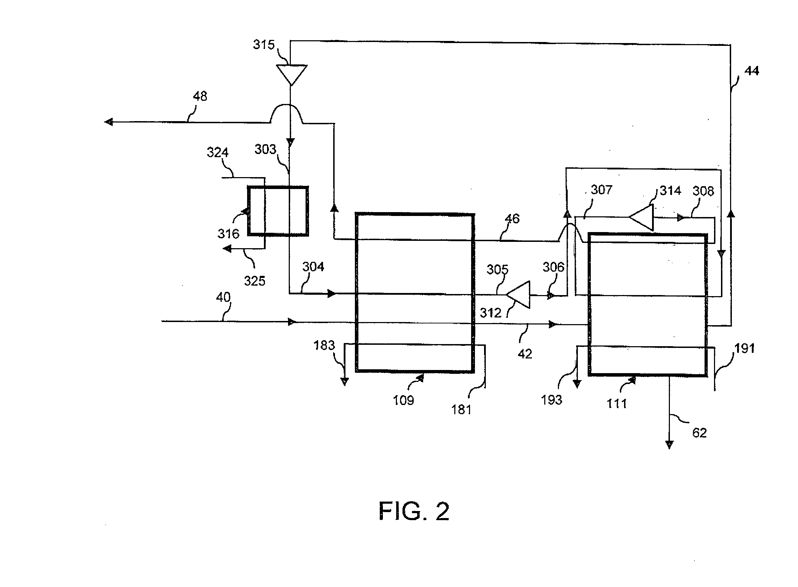

- les figures 2 à 7 représentent schématiquement des variantes de cycles frigorifiques que l'on peut associer à l'invention :
   - la figure 2 représente schématiquement une variante, avec un cycle frigorifique utilisant le gaz pauvre en CO₂ comme fluide de travail et comportant une détente quasi isentropique avec production de travail,

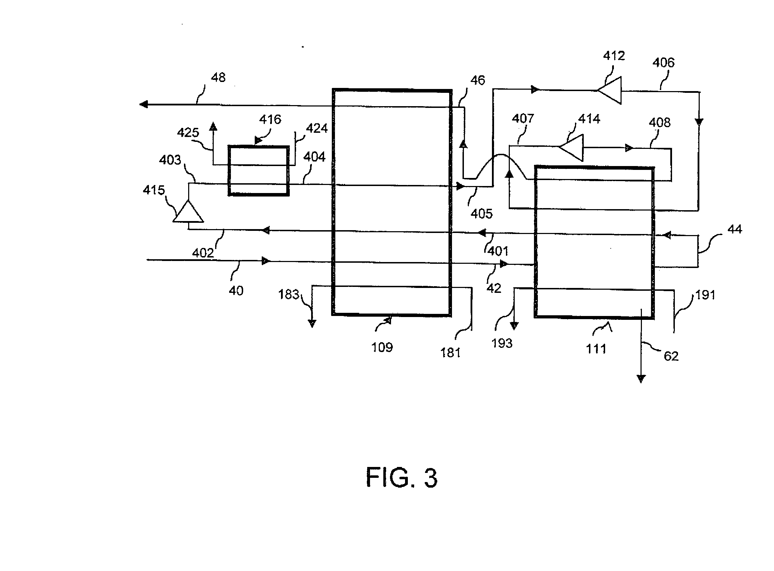

   - la figure 3 représente schématiquement une variante, avec un cycle frigorifique utilisant le gaz pauvre en CO₂ comme fluide de travail et comportant une détente quasi isentropique avec production de travail,

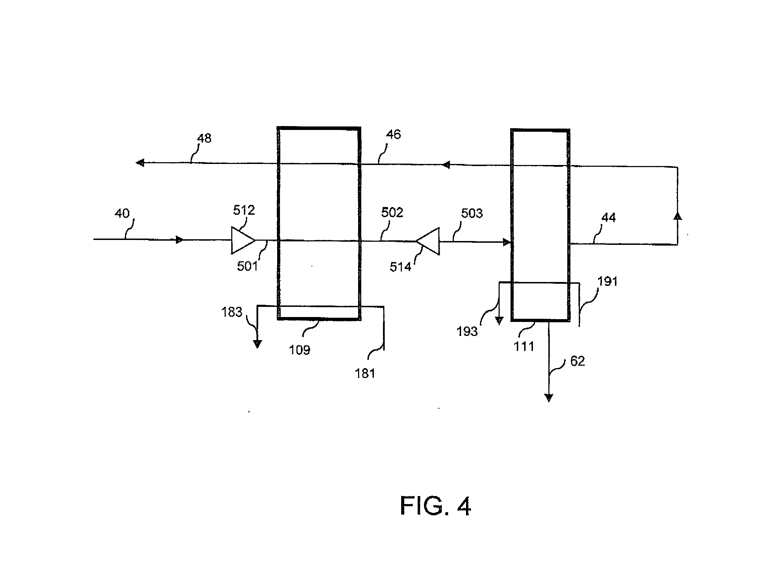

   - la figure 4 représente schématiquement une variante du procédé avec un cycle frigorifique utilisant le fluide à traiter comme fluide de travail et comportant une détente quasi isentropique avec production de travail, pendant laquelle il n'y a pas de cryo-condensation de CO₂,

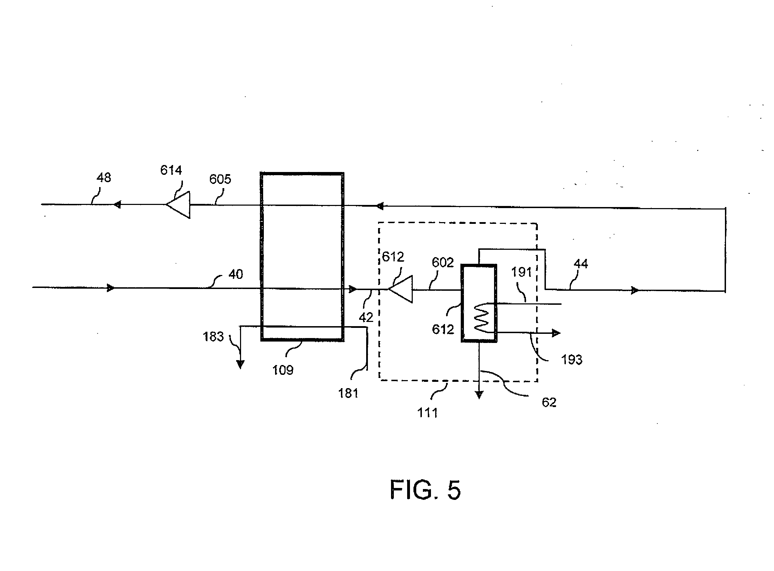

   - la figure 5 représente schématiquement une variante, avec un cycle frigorifique utilisant le fluide à traiter comme fluide de travail et comportant une détente quasi isentropique avec production de travail, pendant laquelle il y a cryo-condensation de CO₂,

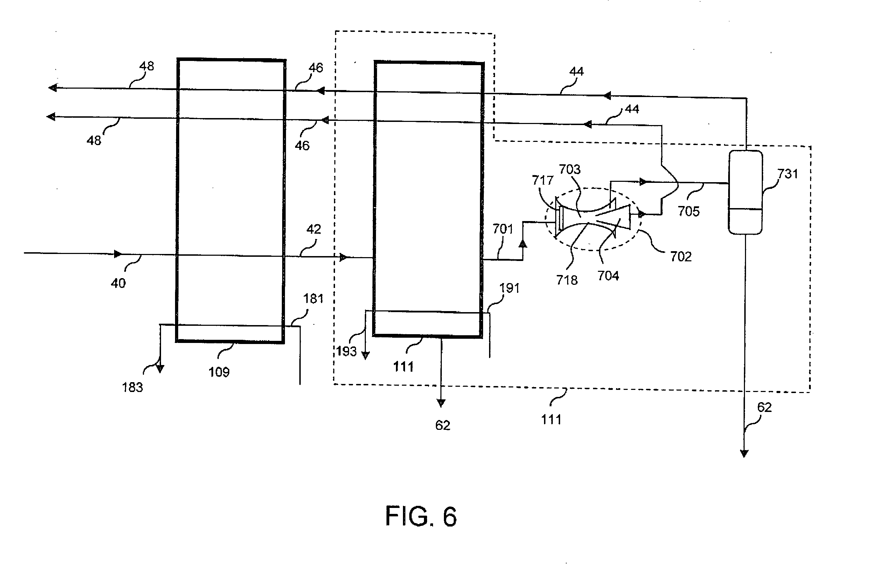

   - la figure 6 représente schématiquement une partie variante avec un cycle frigorifique utilisant le fluide à traiter comme fluide de travail et comportant une détente quasi isentropique sans production de travail, pendant laquelle il y a cryo-condensation de CO₂,

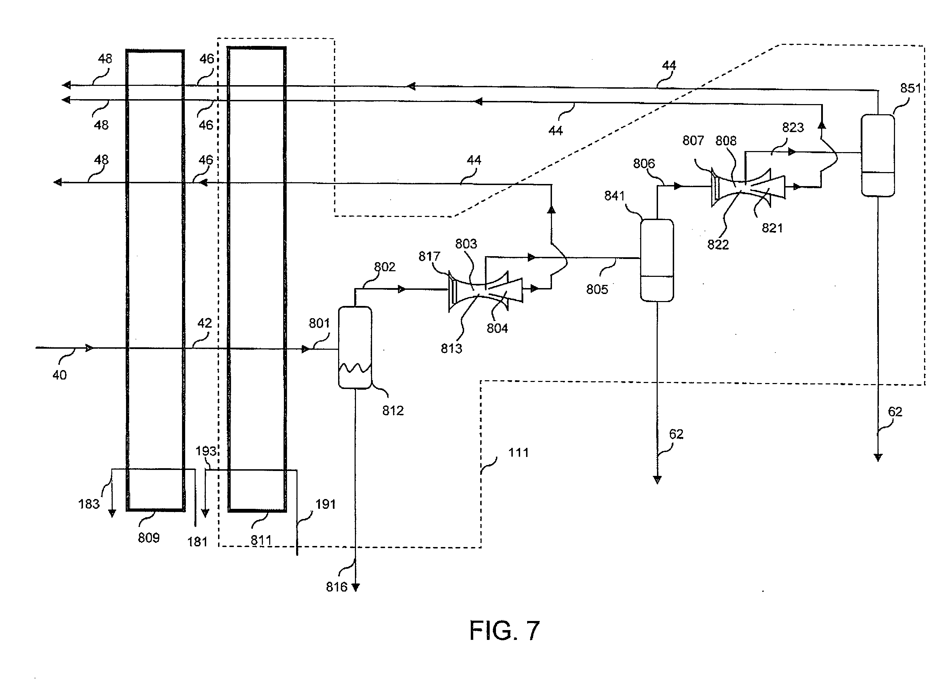

   - la figure 7 représente schématiquement une variante, dans laquelle le second refroidissement comprend aussi une liquéfaction, et comportant en outre un cycle frigorifique utilisant le fluide à traiter comme fluide de travail et comprenant des détentes quasi isentropiques sans production de travail pendant lesquelles il y a cryo-condensation de CO₂,

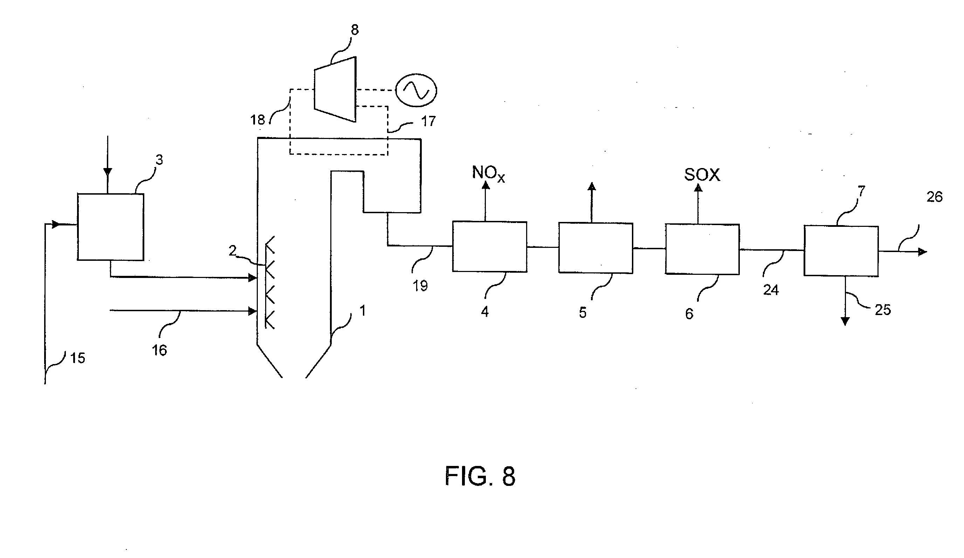

- la figure 8 représente schématiquement l'utilisation d'un procédé conforme à l'invention dans une installation de production d'électricité sur base charbon avec combustion à l'air,

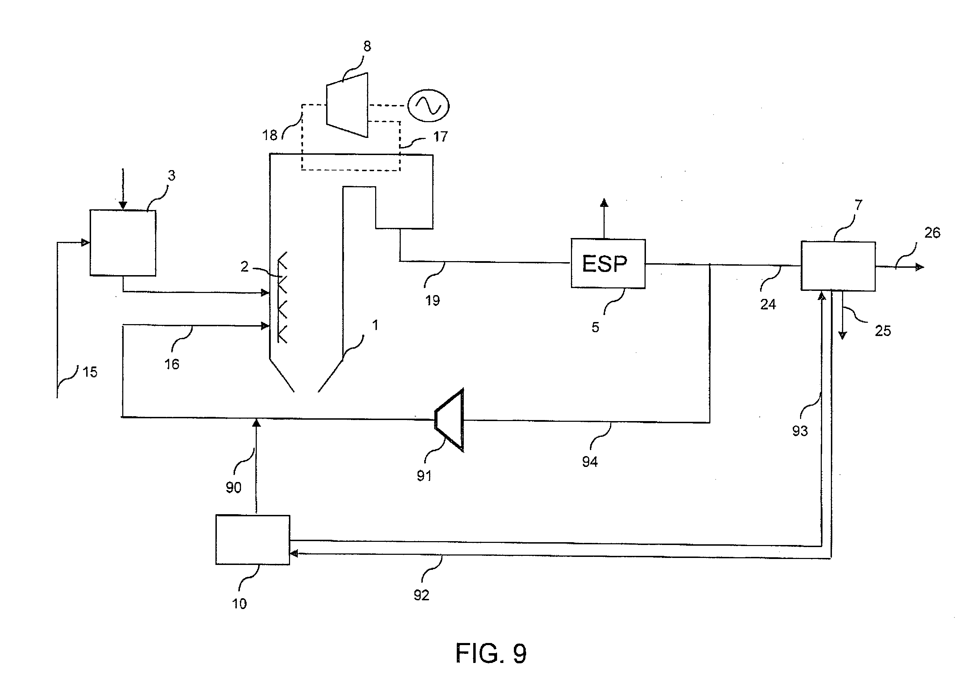

- la figure 9 représente schématiquement l'utilisation d'un procédé conforme à l'invention dans une installation de production d'électricité sur base charbon avec combustion mixte ou à l'oxygène,

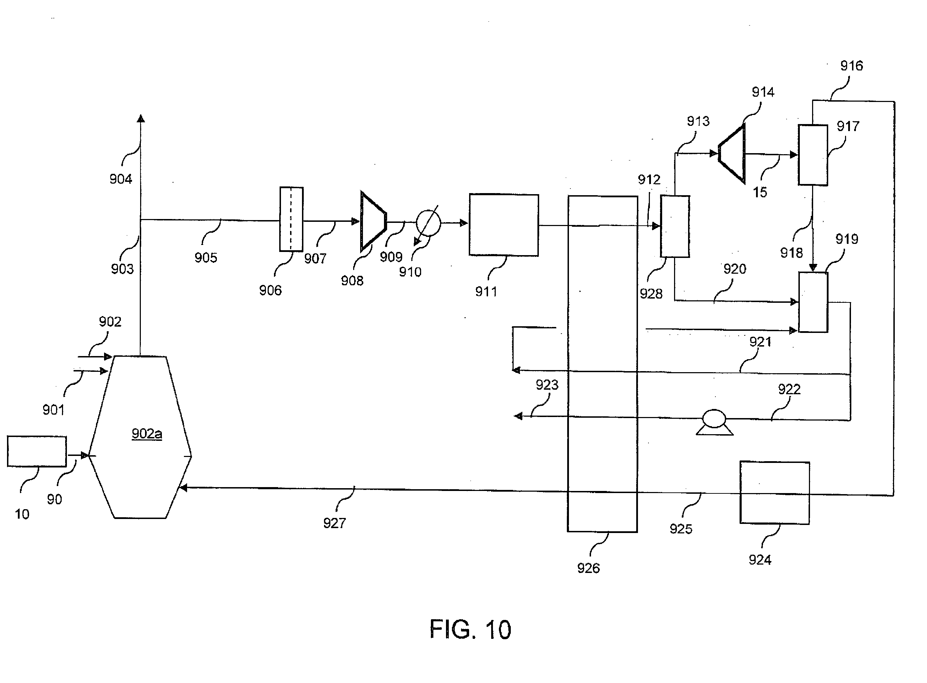

- la figure 10 représente schématiquement un procédé de séparation d'un gaz provenant d'une installation sidérurgique de manière à obtenir un gaz pauvre en CO₂ 927 et un fluide primaire riche en CO₂ 73; l'invention pourrait s'appliquer dans ce cas en mettant en contact direct le gaz pauvre en CO₂ 927 sec avec de l'eau industrielle de manière à obtenir de l'eau réfrigérée (non représenté) pour l'utiliser dans les échangeurs 906 et/ou 105.

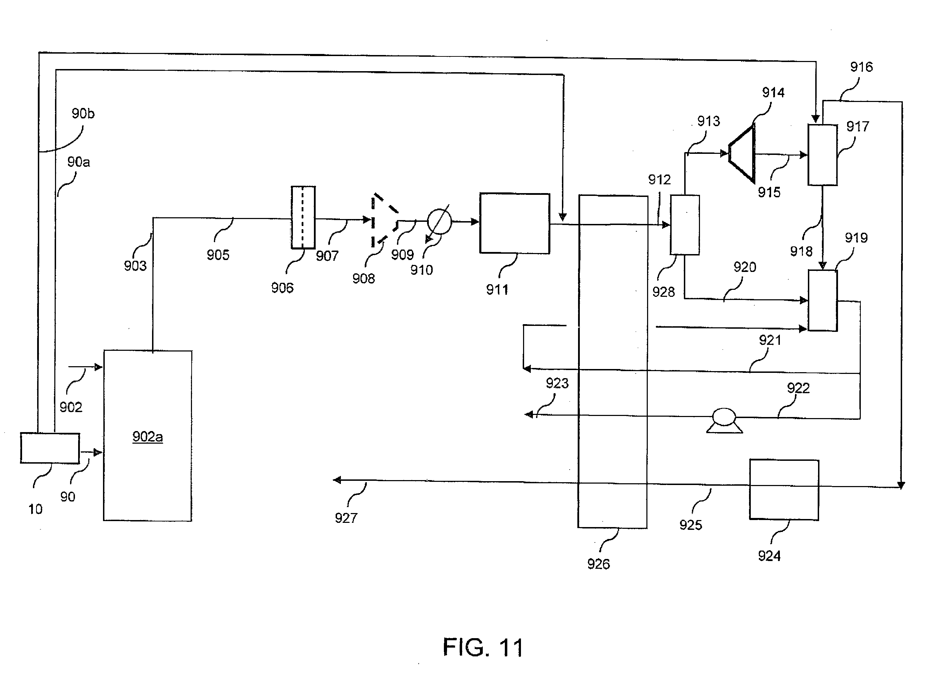

- la figure 11 représente schématiquement un procédé de séparation d'un gaz de synthèse provenant d'une installation de production de gaz de synthèse fonctionnant à l'oxygène ; l'invention pourrait s'appliquer dans ce cas en mettant en contact direct le gaz pauvre en CO₂ 927 sec avec de l'eau industrielle de manière à obtenir de l'eau réfrigérée (non représenté) pour l'utiliser dans un échangeur de l'unité 907 et/ou dans l'échangeur 105.

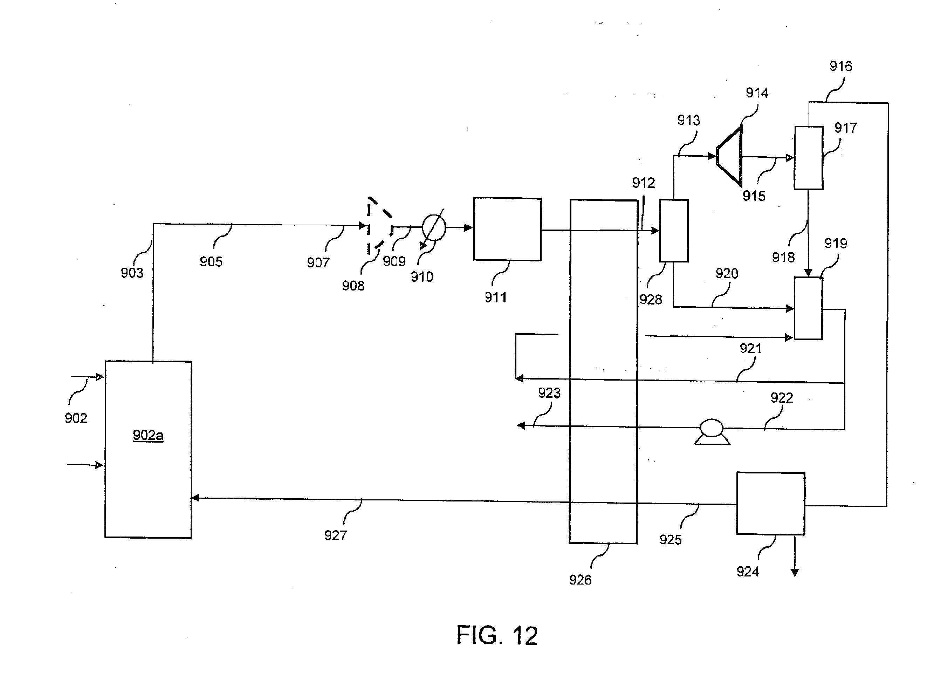

- la figure 12 représente schématiquement un procédé de séparation d'un gaz de synthèse provenant d'une installation de production de monoxyde de carbone à partir d'un gaz de synthèse provenant d'un réformage à la vapeur d'un gaz de synthèse; l'invention pourrait s'appliquer dans ce cas en mettant en contact direct un gaz pauvre en CO₂ 927 et/ou 929 sec avec de l'eau industrielle de manière à obtenir de l'eau réfrigérée (non représenté) pour l'utiliser dans les échangeurs 906 et/ou 105.

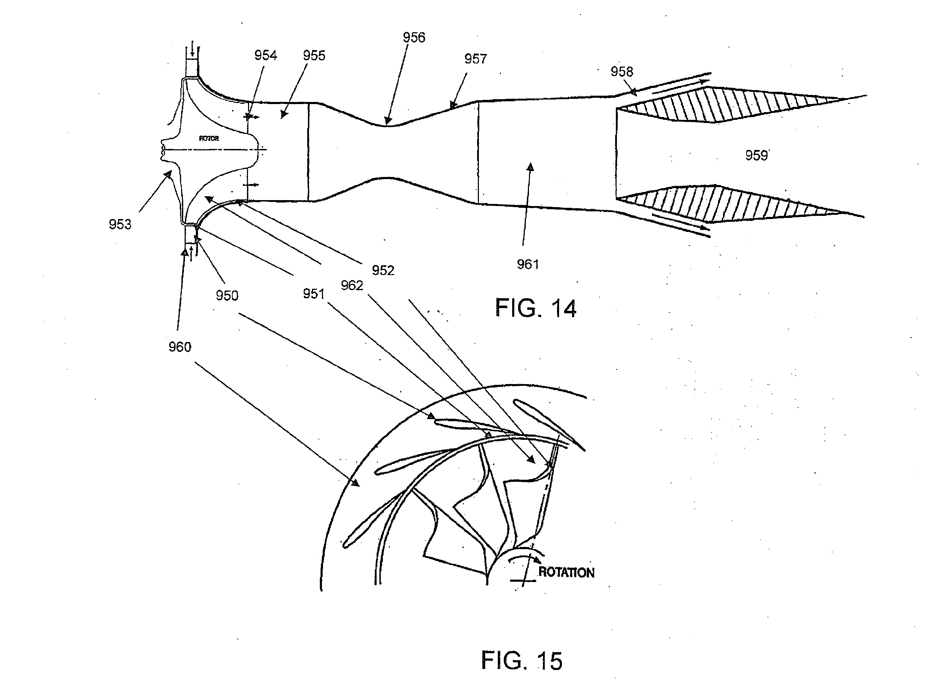

- les figures 14 et 15 représentent une turbine pour réaliser une détente quasi isentropique du fluide à traiter avec production de travail extérieur.

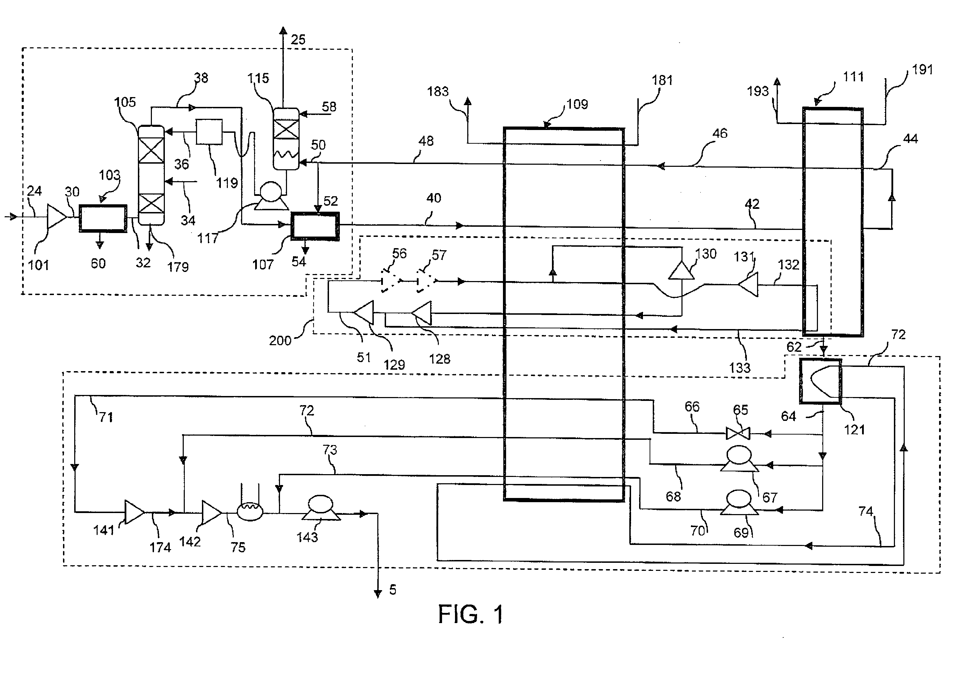

L'installation illustrée par la figure 1 met en oeuvre les étapes décrites ci-après.

Le fluide 24 constitué de fumées est comprimé dans un compresseur 101, notamment pour compenser les pertes de charges dans les différents équipements de l'installation. Notons que cette compression peut aussi être combinée avec la compression dite de tirage de la chaudière donnant naissance aux fumées. Elle peut aussi être réalisé entre d'autres étapes du procédé, ou à l'aval du procédé de séparation de CO₂ ;

Le fluide comprimé 30 est injecté dans un filtre 103 pour éliminer les particules jusqu'à un niveau de concentration inférieur à 1 mg/m³, de préférence inférieur à 100 µg/m³.

Nous décrivons plus précisément ci-après certaines modalités de l'invention. Le fluide dépoussiéré 32 est refroidi à une température proche de 0°C, en général entre 0°C et 10°C, de manière à condenser la vapeur d'eau qu'il contient. Ce refroidissement est réalisé dans une tour 105, avec injection d'eau à deux niveaux, eau froide 36 et eau à température proche de la température humide de l'air ambiant 34. On peut aussi envisager un contact indirect. La tour 105 peut avoir ou non des garnissages.

Le fluide 38 est envoyé dans une unité d'élimination de la vapeur d'eau résiduelle 107, utilisant par exemple l'un et/ou l'autre des procédés suivants :
- Adsorption sur lits fixes, lits fluidisés et/ou sécheur rotatif, l'adsorbant pouvant être de l'alumine activée, du gel de silice ou un tamis moléculaire (3A, 4A, 5A, 13X, ...) ;
- Condensation dans un échangeur à contact direct ou indirect.

Le fluide séché 40 est ensuite introduit dans l'échangeur 109 où le fluide est refroidi jusqu'à une température proche, mais en tout état de cause, supérieure à la température de solidification du CO₂. Celle-ci peut être déterminée par l'homme du métier connaissant la pression et la composition du fluide 40 à traiter. Cette dernière est située aux environs de -100°C si la teneur en CO₂ du fluide à traiter est de l'ordre de 15% en volume et pour une pression proche de la pression atmosphérique.

Le fluide 42 ayant subi un premier refroidissement 109 est ensuite introduit dans une enceinte 111 pour poursuivre le refroidissement jusqu'à la température qui assure le taux de capture du CO₂ souhaité. Il se produit une cryo-condensation d'au moins une partie du CO₂ contenu dans le fluide 42, de manière à produire d'une part un gaz 44 appauvri en CO₂ et d'autre part un solide 62 comprenant majoritairement du CO₂. Le gaz 44 sort de l'enceinte 111 à une température de l'ordre de -120°C. Cette température est choisie en fonction du taux de capture du CO₂ visé. Avec cette température, la teneur en CO₂ dans le gaz 44 est de l'ordre de 1.5% en volume, soit un taux de capture de 90% en partant d'un fluide à traiter comprenant 15% de CO₂. Plusieurs technologies peuvent être envisagées pour cette enceinte 111 :
- Echangeur de cryo-condensation solide en continu dans lequel on produit du CO₂ solide sous forme de neige carbonique, que l'on extrait par exemple par une vis et que l'on pressurise pour l'introduire dans un bain de CO₂ liquide 121, où règne une pression supérieure à celle du point triple du CO₂. Cette pressurisation peut aussi être réalisée par lots dans un système de silos. La cryo-condensation solide en continu peut elle-même être réalisée de plusieurs manières :
- Echangeur à surface raclée, les racleurs étant par exemple en forme de vis de manière à favoriser l'extraction du solide ;
- Echangeur à lit fluidisé de manière à entraîner la neige carbonique et nettoyer les tubes par des particules par exemple de densité supérieure à celle de la neige carbonique ;
- Echangeur avec extraction de solide par vibrations, ultra-sons, effet pneumatique ou thermique (réchauffement intermittent de manière à la chute de la neige carbonique) ;
- Accumulation sur une surface lisse, avec une chute périodique « naturelle » dans un bac ;
- Cryo-condensation solide par lot (ou « batch » en anglais) : dans ce cas, plusieurs échangeurs en parallèle peuvent être utilisés alternativement. Puis ils sont isolés, pressurisés à une pression supérieure à celle du point triple du CO₂, de manière à liquéfier le CO₂ solide et éventuellement le vaporiser partiellement.

Le fluide 46 est ensuite réchauffé dans l'échangeur 109.

Nous allons maintenant décrire plus précisément l'invention dans son étape b) : en sortie de l'échangeur 109, le fluide 48 peut encore servir notamment à régénérer l'unité d'élimination de vapeur résiduelle 107 et/ou à produire de l'eau froide 36a par évaporation dans une tour à contact direct 115 où l'on introduit un fluide sec 50 qui va se saturer en eau en en vaporisant une partie. Eventuellement, l'eau froide peut subir un refroidissement supplémentaire dans un groupe frigorifique 119.

le solide 62 comprenant majoritairement du CO₂ est transféré vers un bain de CO₂ liquide 121.

Ce bain 121 doit être chauffé pour rester liquide, pour compenser l'apport de froid par le solide 62 (chaleur latente de fusion et chaleur sensible). Ceci peut être fait de différentes manières :
- par échange de chaleur avec un fluide 72 plus chaud. Les frigories du fluide 74 peuvent être utilisées ailleurs dans le procédé,
- par échange direct, par exemple en prélevant dans le bain 121 un fluide 80, en le chauffant dans l'échangeur 109 et en le réinjectant dans le bain 121.

Du liquide 64 comprenant majoritairement du CO₂ est prélevé du bain 121. Ce liquide est divisé en trois flux. Dans l'exemple, le premier est obtenu par une détente 65 à 5.5 bar absolu produisant un fluide diphasique, gaz-liquide, 66. Le second, 68, est obtenu par compression 67, par exemple à 10 bar. Le troisième, 70, est comprimé par exemple à 55 bar. Le niveau 5.5 bar apporte du froid à une température proche de celle du point triple du CO₂. Le niveau à 10 bar permet le transfert de la chaleur latente de vaporisation du fluide 68 à environ -40°C. Enfin, à 55 bar, le fluide 70 ne se vaporise pas durant l'échange 109. Ceci permet une bonne valorisation des frigories contenues dans le fluide 64 pendant l'échange 109 tout en limitant l'énergie nécessaire pour produire un flux de CO₂ purifié et comprimé 5.

Une partie du froid nécessaire au premier refroidissement 109 et au second refroidissement 111 est apportée par un cycle frigorifique 200 mettant en oeuvre un fluide de travail 51 qui est de l'argon. Il comprend successivement : une compression 129, éventuellement deux compressions 56 et 57, un refroidissement par échange indirect 109, une détente quasi isentropique 131 qui induit un refroidissement, un réchauffement dans l'enceinte 111, un réchauffement 109. Pendant le refroidissement 109, une partie du fluide de travail est prélevée, puis subit une détente quasi isentropique 130, puis un échange indirect 109 et enfin une compression 128 pour aller rejoindre la compression 129. Les détentes quasi isentropiques 130 et 131 fournissent un travail dont une partir sert pour les compressions 56 et 57.

Ce cycle 200 produit du froid entre environ -100 et -120°C pour la cryo-condensation 111 et entre environ 5°C et -100°C pour palier le déficit de froid au cours de l'échange 109.

Une autre partie du froid nécessaire au premier refroidissement 109 est apportée par un cycle frigorigène supplémentaire 181, 183, par exemple de type Rankine inversé.

Une autre partie du froid nécessaire au second refroidissement 111 est apportée par un cycle frigorigène supplémentaire 191, 193 par exemple de type Rankine inversé.

Après l'échange indirect 109, les fluides primaires riches en CO₂ 66, 68, 70 sont comprimé de manière étagée 141, 142, 143. Par exemple, les premiers étages compriment des flux gazeux. Si besoin est, le CO₂ comprimé 75 est refroidi par un échangeur à contact indirect afin d'être liquide. Puis il est mélangé au flux 73. Ce mélange liquide est pompé jusqu'à la pression de transport (fluide 5). La pression de transport étant en général supercritique, on considèrera par extension comme liquide les fluides supercritiques à une température inférieure à celle du point critique du CO₂.

Sur les figures 2 à 7, qui représentent des exemples conformes à des modes de réalisation particuliers de l'invention, on n'a pas fait figurer les étapes qui concernent le fluide à traiter 40 avant son premier refroidissement 109, ni la compression des fluides primaires riches en CO₂ après l'échange de chaleur 109. On a représenté uniquement ce qui change par rapport à la figure 1 et qui concerne essentiellement les cycles frigorifiques apportant du froid aux échanges 109 et 111.

La figure 2 illustre une variante de la détente quasi isentropique avec production de travail, où le fluide de travail est le gaz pauvre en CO₂ 44. Le procédé de cryo-condensation est le même que sur la figure 1. Seules les modifications sont détaillées ci-dessous.

Le gaz pauvre en CO₂ 44 est comprimé par exemple par un compresseur étagé 315. En sortie, le fluide 303 est refroidi si nécessaire à la température d'entrée de l'échangeur 109 par l'échangeur 316. Il peut être à contact direct ou indirect.

Le gaz pauvre en CO₂ comprimé 304 est refroidi dans l'échangeur 109 pour pouvoir être détendu dans la turbine 312 (détente quasi isentropique), afin de fournir une partie du froid nécessaire pour l'échange 111. Le fluide 307 sortant de l'échangeur 111 est à nouveau détendu (détente quasi isentropique) pour fournir du travail et du froid pour l'échangeur 111 via le fluide 308. Cette boucle de détente du gaz pauvre en CO₂ peut être répétée au tant de fois que nécessaire.

Après l'échangeur 111, le gaz pauvre en CO₂ 46 est réchauffé dans l'échangeur 109. Le fluide 48 sortant est traité comme le fluide 48 de la figure 1.

Une partie du froid nécessaire à l'échangeur 111 peut être apportée par un cycle frigorigène 191, 193 de type Rankine.

La figure 3 illustre une autre variante de la détente quasi isentropique avec production de travail.

Le gaz pauvre en CO₂ 44 cède ces frigories dans les échangeurs 111 et 109. Il est ensuite comprimé par le compresseur 415 étagé. Ensuite il est refroidi si nécessaire à la température d'entrée de l'échangeur 109 dans l'échangeur 416. Celui-ci peut être à contact direct ou indirect.

Le gaz pauvre en CO₂ 404 est à nouveau refroidi dans l'échangeur 109 avant d'être détendu par la turbine 412. Cette turbine quasi isentropique produit le froid nécessaire pour compenser une partie du déficit de frigories de l'échangeur 111.

Ensuite, le fluide 407 est à nouveau détendu par la turbine quasi isentropique 414. Le fluide 408 cède ses frigories pour compenser une partie du déficit de frigories de l'échangeur 111. Cette boucle de détente du gaz pauvre en CO₂ peut être répétée autant de fois que nécessaire.

Après l'échangeur 111, le gaz pauvre en CO₂ 46 se réchauffe dans l'échangeur 109. Enfin, le fluide sortant 48 est traité comme le fluide 48 de la figure 1.

La figure 4 illustre une autre variante de la détente quasi isentropique avec production de travail.

Le fluide à traiter 40 est comprimé par le compresseur 512 qui peut être étagé. Le gaz pauvre en CO₂ est détendu dans une turbine quasi isentropique 514. La température du fluide 503 doit rester supérieure à la température de cryo-condensation du CO₂.

Une partie du CO₂ contenu dans le fluide 503 se condense alors dans l'enceinte 111. Le CO₂ solide 62 est versé dans le bain liquide 121 et les étapes suivantes sont les mêmes que celles décrites dans la figure 1 (à partir du bain 121 et du flux 64). Le gaz pauvre en CO₂ 44 transmet ses frigories aux échangeurs 111 et 109. Le fluide sortant 48 est traité comme le fluide 48 de la figure 1.

La figure 5 illustre une autre variante de la détente quasi isentropique avec production de travail, dans laquelle le fluide de travail est le fluide à traiter.

On réalise une détente quasi isentropique avec production de travail du fluide 42 dans la turbine 612 afin de refroidir le fluide à une température en dessous de la température de cryo-condensation de CO₂ et ainsi produire du CO₂ solide, sous forme de neige carbonique, et un gaz appauvri en CO₂ 602.

Cette turbine de détente 612 doit être conçue avec beaucoup de soin. Elle doit être adaptée aux grands débits tels que ceux des fumées 40 d'une installation industrielle, avoir un très bon rendement isentropique, et résister à l'érosion éventuelle supplémentaire due à la présence de CO₂ solide. Pour ce faire, on autorise la présence de neige carbonique dans la partie rotorique de la turbine (zone comprise entre le bord d'attaque 951 et le bord de fuite 954 sur les figures 14 et 15, et de l'interdire, ou de la minimiser, dans la partie statorique 960 en amont de la partie rotorique (zone comprise à l'amont du bord de fuite des aubages statoriques 950) de manière notamment à ne pas en éroder le bord d'attaque des aubages 952 de la partie rotorique. En d'autre terme, il est préférable que le CO₂ soit à l'état vapeur ou vapeur sursaturée dans la partie statorique, ou qu'il présente des nuclei de neige carbonique suffisamment petits pour éviter l'érosion de la partie rotorique (inférieurs à 10 µm, de préférence 1 µm de diamètre hydraulique).

La turbine peut être radiale (centripète ou centrifuge). Elle peut être supersonique à onde de choc. Elle peut être axiale.

Cette dernière technologie est la mieux adaptée aux grands débits, mais elle nécessite de nombreux étages successifs statoriques et rotoriques. Pour éviter l'érosion, il sera préférable de séparer la neige carbonique en aval de chaque étage rotorique, avant l'entrée du fluide dans l'étage statorique suivant. Les deux premières technologies présentent l'avantage de rester efficaces pour des taux de détente élevés (supérieurs à 10), donc elles permettent d'éviter d'avoir à réaliser de multiples séparations.

Par ailleurs, d'autres précautions doivent de préférence être prises pour réaliser une telle turbine :
- minimiser la nucléation hétérogène (sur les surfaces statoriques et rotoriques), par exemple en chauffant certaines de ces surfaces ou en appliquant des revêtements spéciaux ;
- retarder la nucléation en éliminant les composés moins volatils que le CO₂ (y compris les particules solides) avant d'entrer dans la turbine, de manière à ce qu'ils ne constituent pas des nuclei favorisant la nucléation du CO₂ solide ;
- augmenter la résistance des surfaces à l'érosion par l'utilisation de métaux plus résistants, comme le titane ou par un revêtement spécial ou par un traitement de surface ;
- dans le cas de la turbine radiale centripète, il est préférable de faire circuler un gaz de balayage dans le dos de roue 953. Ce gaz se mélange avec le gaz détendu à l'interface entre la partie statorique (aubages) et la partie rotorique (roue). Ainsi, on évite la formation et l'accumulation de solide en dos de roue.

Puis on sépare cette neige carbonique du gaz appauvri en CO₂ dans un séparateur 612 afin d'obtenir un solide comprenant majoritairement du CO₂ 62 et un gaz pauvre en CO₂ 44.

Cette séparation peut se faire en aval de la partie rotorique en utilisant la mise en rotation du fluide dans la partie rotorique ainsi que l'effet centrifuge pour séparer une fraction riche en CO₂ en périphérie d'une fraction appauvri en CO₂ au centre. Il peut aussi être intéressant de réaliser une mise en vitesse et donc une détente supplémentaire du fluide dans un convergent 956 (turbine dite de Laval). En diminuant la pression avant décélération du gaz, cela permet d'augmenter la quantité de CO₂ solidifié. On récupère l'essentiel du gaz pauvre en CO₂ au centre de l'écoulement 959 et l'essentiel du CO₂ solide en périphérie 958 mélangé avec une fraction de gaz.

L'intérêt d'une turbine pour réaliser la cryo-condensation solide est d'arriver à générer beaucoup de CO₂ solide dans un volume très restreint comparé à des systèmes à échange indirect.

Si nécessaire, un cycle frigorigène supplémentaire 191, 193 de type Rankine ou comportant une détente quasi isentropique d'un fluide de travail avec ou sans production de travail apporte du froid au séparateur 612. Le solide comprenant majoritairement du CO₂ 62 est versé dans le bain liquide 121 et les étapes suivantes sont les mêmes que celles représentées à la figure 1.

On réchauffe gaz pauvre en CO₂ 44 par échange de chaleur avec le fluide à traiter dans l'échangeur 109. Puis on comprime le fluide 605 à une pression supérieure ou égale à la pression atmosphérique. Enfin, le fluide sortant 48 est traité comme dans la figure 1.

La figure 6 illustre un mode de réalisation avec détente quasi isentropique sans production de travail.

On refroidit toujours le fluide à traiter 42 en dessous de la température de cryo-condensation du CO₂ dans l'enceinte 111 pour produire un gaz 701 pauvre en CO₂ et refroidi. Il est également possible de placer cette enceinte après la partie « détente/Venturi » 702 du procédé, qui va maintenant être décrite.

Une partie du CO₂ à capturer s'est solidifiée sous la forme d'un solide contentant majoritairement du CO₂ 62 et est extraite de l'enceinte 111. Pour améliorer la capture du CO₂, le fluide 701 est mis en rotation autour d'un axe sensiblement parallèle au sens de son écoulement par un système d'ailettes fixes 717.

Le fluide 703 est détendu en sortie des ailettes et se refroidit en-dessous de la température de cryo-condensation du CO₂ sans production de travail. La détente peut s'effectuer par l'effet Venturi en faisant passer le fluide dans une restriction 718. Des particules solides comprenant majoritairement du CO₂ se forment et sont récupérées en périphérie de l'écoulement grâce à l'effet centrifuge induit par la rotation du fluide.

On récupère un mélange 705 de solide comprenant majoritairement du CO₂ et du gaz. Les incondensables 44, 46 sortants cèdent leurs frigories dans les échangeurs 111 et 109.

Le flux 705 est composé majoritairement de solide, cependant il peut être nécessaire de séparer le gaz résiduel du solide dans un pot séparateur 731. La partie incondensable cède ensuite ses frigories dans les échangeurs 111 et 109.

Le solide comprenant majoritairement du CO₂ 62 est versé dans le bain liquide 121 et subit les mêmes étapes que celles décrites dans la figure 1.

Les flux 48 sont utilisés pour refroidir l'eau, de la même manière que le flux 50 de la figure 1.

La figure 7 illustre un autre mode de réalisation avec détente quasi isentropique sans production de travail.

Le fluide à traiter 40 est sous pression, par exemple jusqu'à 60 bar (compression réalisée par le compresseur 101 ou par un compresseur supplémentaire). Il est éventuellement plus concentré en CO₂ que dans les autres exemples, typiquement entre 50 et 90% en volume.

L'échange 809 comporte les mêmes caractéristiques que l'échange 109 de la figure 1. L'échangeur 811 refroidit le fluide à traiter 42 à une température inférieure à la température de liquéfaction du CO₂. Il en sort un fluide à traiter refroidi 801 qui est envoyé à un pot séparateur 812.

Un liquide riche en CO₂ 816 est extrait par le séparateur 812. Le fluide résiduel 802 est mis en rotation autour d'un axe sensiblement parallèle au sens de son écoulement par un système d'ailettes fixes 817. Il est détendu en sortie 803 des ailettes après sa mise en rotation et se refroidit en-dessous de la température de cryo-condensation du CO₂ sans production de travail. La détente peut s'effectuer par effet Venturi en faisant passer le fluide dans une restriction 818.

Des particules solides comprenant majoritairement du CO₂ se forment et sont récupérées en périphérie de l'écoulement grâce à l'effet centrifuge induit par la rotation du fluide. Le flux 805 est composé majoritairement de solide, cependant il peut être nécessaire de séparer le gaz résiduel du solide dans un pot séparateur 841. Les incondensables 44 cèdent leurs frigories dans les échangeurs 811 et 809.

Pour améliorer le taux de capture du CO₂, on peut ajouter une deuxième (voire une troisième, ou plus) étape de détente quasi isentropique du fluide 806 avec effet Venturi. Cette étape est identique à la précédente :
- on met rotation le fluide 806 autour d'un axe sensiblement parallèle au sens de son écoulement par un système d'ailettes fixes 807 ;
- après sa mise en rotation, on détend le fluide en sortie des ailettes 808 pour le refroidir en-dessous de la température de cryo-condensation du CO₂ sans production de travail. La détente peut s'effectuer par l'effet Venturi en faisant passer le fluide dans une restriction 822.

Le solide 62 comprenant majoritairement du CO₂ récupéré en sortie des pots séparateurs 841 et éventuellement 851 est versé dans le bain liquide 121 et traité comme dans la figure 1. Les flux 48 sont utilisés pour refroidir l'eau, de la même manière que le flux 50 de la figure 1.

La figure 8 représente une installation de production d'électricité sur base charbon, mettant en oeuvre différentes unités d'épuration 4, 5, 6 et 7 des fumées 19.

Un débit d'air primaire 15 passe par l'unité 3 où le charbon 15 est pulvérisé et entraîné vers les brûleurs de la chaudière 1. Un débit d'air secondaire 16 est fourni directement aux brûleurs afin d'apporter un complément d'oxygène nécessaire pour une combustion quasi-complète du charbon. De l'eau d'alimentation 17 est envoyée à la chaudière 1 pour produire de la vapeur 18 qui est détendue dans une turbine 8.

Les fumées 19 issues de la combustion, comprenant de l'azote, du CO₂, de la vapeur d'eau et d'autres impuretés, subissent plusieurs traitements pour enlever certaines desdites impuretés. L'unité 4 enlève les NOx par exemple par catalyse en présence d'ammoniac. L'unité 5 enlève les poussières par exemple par filtre électrostatique et l'unité 6 est un système de désulfurisation pour enlever le SO2₂ et/ou le SO₃. Les unités 4 et 6 peuvent être superflues selon la composition du produit requis. Le débit purifié 24 provenant de l'unité 6 (ou 5 si 6 n'est pas présent) est envoyé à une unité de purification à basse température 7 par cryo-condensation pour produire un débit de CO₂ relativement pur 26 et un débit résiduaire 25 enrichi en azote. Cette unité 7 est aussi appelée unité de capture de CO₂ et met en oeuvre le procédé objet de l'invention, tel qu'illustré, par exemple, par les figures 1 à 7.

La figure 9 représente une installation de production d'électricité sur base charbon, mettant en oeuvre différentes unités d'épuration 5 et 7 des fumées 19.

Un débit d'air primaire 15 passe par l'unité 3, où le charbon 15 est pulvérisé et entraîné vers les brûleurs de la chaudière 1. Un débit de comburant secondaire 16 est fourni directement aux brûleurs afin d'apporter un complément d'oxygène nécessaire pour une combustion quasi-complète du charbon. Ce comburant secondaire résulte du mélange de fumées recirculées 94 à l'aide d'un ventilateur 91 et d'oxygène 90 produit par une unité de séparation des gaz de l'air 10. De l'eau d'alimentation 17 est envoyée à la chaudière 1 pour produire de la vapeur 18, qui est détendue dans une turbine 8.

Les fumées 19 issues de la combustion du charbon, comprenant de l'azote, du CO₂, de la vapeur d'eau et d'autres impuretés, subissent plusieurs traitements pour .enlever certaines desdites impuretés. L'unité 5 (ESP) enlève les poussières, par exemple grâce à un filtre électrostatique. Le débit dépoussiéré 24 provenant de l'unité 5 est envoyé à une unité 7 de purification à basse température, par cryo-condensation, pour produire un débit de CO₂ relativement pur 26 et un débit résiduaire 25 enrichi en azote. Cette unité 7 est aussi appelée unité de capture de CO₂ et met en oeuvre le procédé objet de l'invention, tel qu'illustré, par exemple, par les figures 1 à 7.
Dans ce cas, on utilise la présence d'une unité de séparation des gaz de l'air pour fournir du froid à bas niveau pour la cryo-condensation solide du CO₂ dans l'unité 7 et réaliser une cryo-condensation, de préférence par échange direct avec le gaz à traiter. Le fluide 93 peut être sous forme liquide, gazeuse ou diphasique et est constitué d'un mélange de gaz de l'air refroidis. Par exemple, il peut s'agir d'air ou d'azote gazeux froid (entre -56°C et -196°C), ou encore d'air ou d'azote liquide. Il est destiné à être introduit dans l'enceinte référencée 111 sur les figures 1 à 4 et sur la figure 6, 612 sur la figure 5, 731 sur la figure 6 et enfin 841, 851 sur la figure 7.

L'unité 7 peut également produire un fluide 92 qui sera utilisé dans l'unité de séparation des gaz de l'air. Il peut par exemple s'agir d'une fraction du gaz pauvre en sortie de l'enceinte 111 des figures 1 à 4 et 6, 612 de la figure 5, 731 de la figure 7 et 841, 851 de la figure 8. Ce gaz pauvre, en quelque sorte, restitue du froid à l'unité 10 à un niveau de température supérieur à celui apporté depuis l'unité 10 par le fluide 93.
Il est avantageux de faire varier dans le temps le débit de cette injection de fluide 93. Par exemple, on peut produire et stocker l'azote liquide la nuit, lorsque l'énergie est disponible et bon marché et injecter l'azote liquide le jour de manière à diminuer l'énergie consommée. On dissocie le moment ou le froid est produit par l'unité 10 (par exemple azote liquide) et celui où il est utilisé dans l'unité 7. Dans ce cas, la détente quasi isentropique d'un gaz peut être réalisée dans l'unité 10 plutôt que dans l'unité 7.

Ce schéma peut se révéler bien adapté à des cas de modification d'usines existantes, où le remplacement de l'air primaire envoyé aux pulvériseurs de charbon par un mélange fumées recyclées plus oxygène peut se révéler complexe, d'une part à cause de l'augmentation de la teneur en eau, les fumées en contenant beaucoup plus que l'air humide, d'autre part pour des raisons de sécurité, même si cela ne doit pas être surestimé.

Par ailleurs, il peut se révéler intéressant de combiner les unités 7 et 10 en une seule, notamment en réalisant un (ou plusieurs) échange(s) de chaleur entre des fluides des 2 unités.

La figure 10 représente schématiquement l'utilisation d'un procédé conforme à l'invention dans une installation sidérurgique. Une unité de séparation des gaz de l'air 10 fourni de l'oxygène 90 à un haut-fourneau 900 dans lequel on introduit par ailleurs du minerai de fer 901 et des produits carbonés 902 (charbon et coke). Le haut-fourneau fonctionne dans ce cas-là en présence de très peu d'azote.

Les gaz de haut-fourneaux 903 composés par exemple de 47% de CO, 36% de CO₂, 8% de N₂ et 9% d'autres composés comme H2 et H2O peuvent être divisés en deux. La majeure partie 905 va à l'unité de capture du CO₂, une autre partie 904 sert à déconcentrer la teneur en azote dans la boucle. Le fluide 905 est préalablement refroidi dans un échangeur à contact direct 906, dépoussiéré dans le filtre 103, puis comprimé par un compresseur 901, refroidi dans un échangeur 105 et séché dans un sécheur 107, avant d'entrer dans l'échangeur à basse température 109, où il va être refroidi puis partiellement liquéfié à une température proche du point triple du CO₂ sans formation de solide. Le fluide diphasique gaz-liquide 912 obtenu est séparé en une fraction gazeuse 502 et une fraction liquide 920 dans le séparateur 928. La fraction gazeuse 502 est ensuite refroidie par une détente quasi isentropique, par exemple dans une turbine 514, de manière à obtenir un fluide diphasique gaz-solide 503. Celui-ci est séparé dans l'enceinte 111 en une fraction gazeuse 44 et une fraction solide 62 riche en CO₂. La fraction solide 62 est comprimée par exemple par une vis sans fin et mélangée au liquide 920 dans le bain 121, lequel est chauffé par du gaz 72 produit par la vaporisation du liquide 74 dans l'échangeur 109. Le CO₂ liquide 64 est comprimé par une pompe 69 de manière à obtenir un liquide pressurisé 70 et réchauffé dans l'échangeur 109 sans subir de vaporisation, ou de pseudo-vaporisation si la pression est supérieure à la pression supercritique. Le gaz pauvre est successivement réchauffé par un compresseur 315 et par l'échangeur 109.

L'invention peut aussi être adaptée pour des types de haut-fourneau fonctionnant à l'air enrichi, par exemple en ajoutant une séparation CO/N₂ par distillation cryogénique, en refroidissant le gaz 44 à la température nécessaire.

La figure 11 représente schématiquement l'utilisation d'un procédé conforme à l'invention dans une installation de production de gaz de synthèse à partir d'un procédé à l'oxygène (oxydation partielle, gazéification, réformeur auto-thermique, etc.). Une unité de séparation des gaz de l'air 10 fournit de l'oxygène 90 à un réacteur 900 dans lequel on introduit un produit carboné 902 (charbon, gaz naturel, biomasse, ordures ménagères, etc.).

Les gaz de synthèse 903 comprend principalement les composés CO, CO₂, H₂ et H₂O. Le CO peut être converti (réaction dite de *shift*) en CO₂ et H₂ en présence de vapeur d'eau : CO + H₂O <-> CO₂ + H₂ dans l'unité 907. Cette unité peut aussi inclure un ou plusieurs échangeurs pour le refroidissement du gaz avant compression. Le fluide 905 peut éventuellement être dépoussiéré dans un filtre 103, puis comprimé par un compresseur 101, refroidi dans un échangeur 105 et séché dans un sécheur 107, avant d'entrer dans l'échangeur à basse température 109, où il peut être partiellement liquéfié à une température proche de celle du point triple du CO₂. Ce fluide diphasique gaz-liquide 912 est séparé en une fraction gazeuse 502 et une fraction liquide 920 dans le séparateur 928. La fraction gazeuse 502 est ensuite refroidie par une détente quasi-isentropique, par exemple dans une turbine 514, de manière à obtenir un flux diphasique gaz-solide 503. Celui-ci est séparé en une fraction gazeuse 44 et une fraction solide riche en CO₂ 62 dans l'enceinte 111. La fraction solide 62 est mélangée au liquide 920 dans le bain 121, lequel est chauffé par du gaz 74 produit par la vaporisation du liquide 72 dans l'échangeur 109. Le CO₂ liquide 64 est comprimé par une pompe et réchauffé dans l'échangeur 109 sans subir de vaporisation, ou de pseudo-vaporisation si la pression est supérieure à la pression supercritique. Le gaz pauvre 44 est successivement réchauffé par un compresseur 924 et l'échangeur 109. Ce gaz pauvre constitué essentiellement d'hydrogène peut être envoyé à une turbine à gaz pour réaliser une combustion sans émission de CO₂. L'unité 10 peut fournir de l'azote chaud 90a, que l'on introduira en aval des sécheurs 910, et/ou de l'azote froid 90b, introduit directement dans l'enceinte 111 pour augmenter la quantité de CO₂ capturé. Dans le premier cas, la détente dans la turbine 514 de l'azote chaud présent dans le flux 502 fournit du froid additionnel pour la cryo-condensation solide du CO₂ dans la turbine 514 ; dans le deuxième cas, l'azote froid 90b, en se réchauffant au contact du fluide 503, engendre la cryo-condensation solide du CO₂. L'autre intérêt de l'azote chaud 90a est d'augmenter le poids moléculaire du gaz 502, ce qui peut être intéressant pour diminuer le coût de la détente 514 et/ou de la compression 924. En effet, lorsque ces gaz sont très riches en hydrogène, il n'est pas aisé de comprimer/détendre ces gaz avec les technologies les mieux adaptées à de grands débits à savoir des technologies de type axiales, radiales ou supersonique à onde de chocs. Il est alors nécessaire d'utiliser des technologies de type volumétriques par exemple à piston ou à vis très coûteuses à mettre en oeuvre.

La figure 12 représente schématiquement l'utilisation d'un procédé conforme à l'invention dans une installation de production de gaz de synthèse à partir d'un reformage à la vapeur. On introduit par un produit carboné 902 (gaz naturel, méthanol, naphta, etc.) dans un réacteur 900.

Les gaz de synthèse 903 produit dans le réacteur 900 comprend principalement les composés CO, CO₂, H₂ et H₂O. Le fluide 905 peut éventuellement être comprimé par un compresseur 101, refroidi dans un échangeur 105 et séché dans un sécheur 107, avant d'entrer dans un échangeur à basse température 109, où il peut être partiellement liquéfié à une température proche de celle du point triple du CO₂. Le fluide diphasique gaz-liquide 912 obtenu est séparé en une fraction gazeuse 502 et une fraction liquide 920 dans le séparateur 928. La fraction gazeuse 502 est ensuite refroidie par une détente quasi-isentropique, par exemple dans une turbine 514, de manière à obtenir un diphasique gaz-solide 503. Celui-ci est séparé en une fraction gazeuse 44 et une fraction solide riche en CO₂ 62 dans l'enceinte 111. La fraction solide 62 est mélangée au liquide 920 dans le bain 121, lequel est chauffé par du gaz 74 produit par la vaporisation du liquide 72 dans l'échangeur 109. Le CO₂ liquide 64 est comprimé par une pompe et réchauffé dans l'échangeur 109 sans subir de vaporisation, ou de pseudo-vaporisation si la pression est supérieure à la pression supercritique. Le gaz pauvre 44 peut alors être purifié en CO₂ à basse température par exemple par adsorption avec un tamis moléculaire 13X avant d'être introduit dans une unité cryogénique 924 pour la production de CO. Celle-ci fonctionne par exemple par lavage au méthane ou par condensation partielle du CO. Cette unité 924 produit un gaz enrichi en hydrogène 929 et un gaz enrichi en CO 925. Un fluide ou plusieurs fluide de cette unité peuvent être comprimés à basse température, puis réintroduits dans l'échangeur de chaleur 926.

Dans ce cas, la cryo-condensation solide remplace une élimination du CO₂ par absorption avec des amines (MDEA ou MEA). Si l'on désire produire de l'hydrogène pur, il est possible d'ajouter un PSA H₂ dans ce schéma soit en amont de cette purification par cryo-condensation solide c'est-à-dire en sortie du réformeur 900 après refroidissement du gaz de synthèse, soit sur le gaz riche en H₂ 929.

On pourrait penser que ces procédés de cryo-condensation solide sont en déficit de froid. En fait, il n'en est rien. Au contraire, ces procédés de cryo-condensation solide avec détente quasi isentropique du gaz à traiter produisent trop de froid, surtout si le procédé fournit en outre un travail extérieur. Le problème est alors que les fluides riches en CO₂ et le gaz pauvre en CO₂ sortent à basse température, ce qui constitue une perte énergétique conséquente. Pour minimiser la consommation énergétique de ce procédé, on peut réaliser une ou plusieurs des opérations suivantes :
- en interne :
   o compression froide d'un des fluides du procédé de cryo-condensation :
      ■ gaz à traiter que l'on refroidit à basse température avant compression ;
      ■ gaz pauvre en CO₂ que l'on comprime à basse température (cf. figure 2). On peut soit le détendre à nouveau ou le comprimer sous vide pour le ramener à la pression atmosphérique, ou encore le détendre après l'avoir chauffé dans la partie chaude du procédé ayant produit le gaz à traiter ;
   o cryo-condensation solide indirecte dans un échangeur ;
- en externe :
   o compression froide d'un fluide quelconque de l'installation ;
   o production d'azote liquide et/ou d'air liquide ;
   o cycle de Rankine transcritique sur le CO₂

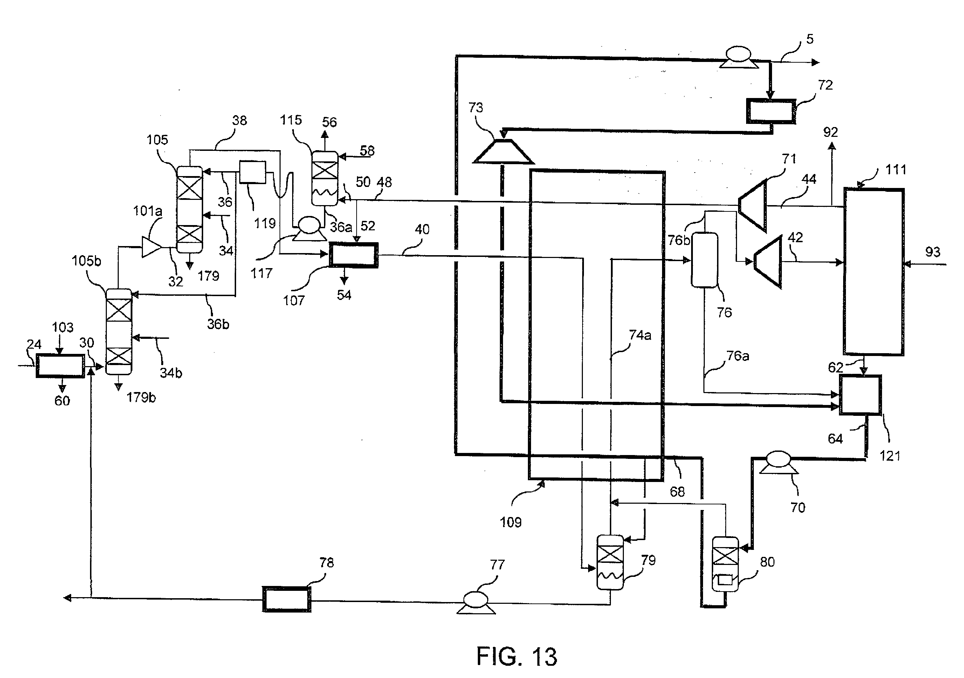

La figure 13 représente schématiquement une variante de l'invention associée à un procédé mettant en oeuvre un cycle de Rankine transcritique sur le CO₂. Il inclut aussi les caractéristiques d'un procédé où l'on réalise successivement une cryo-condensation liquide, puis une cryo-condensation solide et où l'on améliore la pureté du CO₂ produit par deux colonnes à distiller, une pour éliminer les composants moins volatils que le CO₂ (NO₂ ou N₂O₄, SO₂, ...) et une autre pour éliminer les composants plus volatils.

Le fluide 24 est constitué de fumées et peut être à une température de l'ordre de 150°C est injecté dans un filtre 103 pour éliminer les particules jusqu'à un niveau de concentration inférieur à 1 mg/m³, de préférence inférieur à 100 µg/m³.

Nous allons maintenant décrire plus précisément certaines modalités de l'invention : le fluide dépoussiéré 30 est refroidi à une température proche de 0°C, en général entre 0°C et 10°C, de manière à condenser la vapeur d'eau qu'il contient. Ce refroidissement est réalisé dans une tour 105b, avec injection d'eau à deux niveaux, eau froide 36b et eau à température proche de la température humide de l'air ambiant 34b. On peut aussi envisager un contact indirect. La tour 105 peut avoir ou non des garnissages. Cette tour peut aussi servir de tour de lavage du SO₂.

En sortie de cette première tour, le fluide éventuellement désaturé est comprimé à une pression entre 5 et 50 bar abs dans le compresseur 101. Le fluide 32 est refroidi à une température proche de 0°C, en général entre 0°C et 10°C, de manière à condenser la vapeur d'eau qu'il contient. Ce refroidissement est réalisé dans une tour 105, avec injection d'eau à deux niveaux, eau froide 36 et eau à température proche de la température humide de l'air ambiant 34. On peut aussi envisager un contact indirect. La tour 105 peut avoir ou non des garnissages.

Le fluide 38 est envoyé dans une unité d'élimination de la vapeur d'eau résiduelle 107, utilisant par exemple l'un et/ou l'autre des procédés suivants :
- Adsorption sur lits fixes, lits fluidisés et/ou sécheur rotatif, l'adsorbant pouvant être de l'alumine activée, du gel de silice ou un tamis moléculaire (3A, 4A, 5A, 13X, ...) ;
- Condensation dans un échangeur à contact direct ou indirect.

Le fluide à traiter 40 est refroidi, puis mis en contact dans une colonne à distiller 79 avec du CO₂ pur, de manière à récupérer les composés moins volatils que le CO₂ sous la forme d'un liquide contenant du CO₂ et par exemple du NO₂ (ou son dimère N₂O₄). Ce liquide peut être pompé et vaporisé dans l'unité 78, puis envoyé, soit dans une chambre de combustion pour réduire le NO₂, soit dans l'unité de purification du flux 30 par lavage à basse pression du SO₂, pour y servir de réactif, soit directement sous forme de NO₂, soit sous forme d'acide nitrique après réaction avec de l'eau.

Le fluide à traiter 74a est ensuite refroidi et partiellement condensé sous forme liquide et envoyé dans le séparateur 76. La fraction liquide 76a est envoyée au bain 121. La fraction gazeuse 76b est envoyée à une turbine de détente de manière à y produire un flux diphasique gaz-solide 42 qui est envoyé dans l'enceinte 111 pour y être séparé entre un gaz pauvre en CO₂ 44 et du CO₂ solide 62. Un fluide auxiliaire 93 par exemple en provenance d'une unité de séparation des gaz de l'air peut éventuellement fournir du froid additionnel pour la cryo-condensation solide. Dans ce cas, il peut être intéressant de prélever sur le gaz pauvre en CO₂ 44 un fluide 92 qui retourne à l'unité qui a fourni le fluide 93. Le solide 62 est comprimé par exemple par une vis sans fin et injecté dans le bain de CO₂ liquide 121, dans lequel on prélève un liquide 64. Ce liquide peut éventuellement être pompé et introduit dans une colonne à distiller 80 pour en éliminer les composés plus volatils que le CO₂. Le liquide pur 68 est réchauffé sans subir de vaporisation, ou de pseudo-vaporisation s'il est supercritique. Il peut être à nouveau pompé pour obtenir le fluide 5 prêt au transport. Une partie du fluide 5 peut être prélevée pour être vaporisée, ou pseudo-vaporisée, dans une unité 72. Cette unité 72 est par exemple une source quelconque de chaleur de l'installation produisant le fluide à traiter. Cette partie du fluide est ensuite détendue dans une turbine 73 servant à produire de l'électricité ou de la puissance mécanique, puis refroidie dans l'échangeur 109 et condensée par échange direct dans le bain 121, tout en réalisant la fusion du CO₂ solide.

Nous allons maintenant décrire plus précisément l'invention dans son étape b) : en sortie de l'échangeur 109, le fluide 48 peut encore servir notamment à régénérer l'unité d'élimination de vapeur résiduelle 107 et/ou à produire de l'eau froide 36a par évaporation dans une tour à contact direct 115 où l'on introduit un fluide sec 50 qui va se saturer en eau en en vaporisant une partie. Eventuellement, l'eau froide peut subir un refroidissement supplémentaire dans un groupe frigorifique 119. Ensuite, cette eau froide peut être utilisée dans l'un et/ou l'autre des tours 105 et 105b de manière à refroidir le gaz à traiter avant et/ou après compression.

Les Figures 14 et 15 représentent une turbine pour réaliser une détente quasi isentropique du fluide à traiter avec production de travail extérieur conforme à l'invention. La partie statorique amont 960 commence par la volute (non représentée) puis par des aubages 950 qui peuvent être fixes ou variables. On rentre ensuite dans la partie rotorique 960 qui comprend par exemple des ailettes 952 avec un bord d'attaque 951 où commence la partie rotorique 960 et un bord de fuite 954 où elle s'achève.

En aval de la partie rotorique, si l'on ne désire pas utiliser la force centrifuge sur les parties solide, la partie rotorique peut être constituée d'un simple cône de décélération.

Si l'on veut utiliser la partie statorique aval 961 pour réaliser une première séparation, on peut utiliser la mise en rotation du fluide dans la partie rotorique ainsi que l'effet centrifuge pour séparer une fraction riche en CO₂ en périphérie d'une fraction appauvri en CO₂ au centre. Il peut aussi être intéressant de réaliser une mise en vitesse et donc une détente supplémentaire du fluide dans un convergent 956 (turbine dite « de Laval »). En diminuant la pression avant décélération du gaz, cela permet d'augmenter la quantité de CO₂ solidifié. On récupère l'essentiel du gaz pauvre en CO₂ au centre de l'écoulement 959 et l'essentiel du CO₂ solide en périphérie 958 mélangé avec une fraction de gaz.

## Revendications

1. Procédé de production d'eau réfrigérée (36a), d'au moins un gaz pauvre en CO₂ (44) et d'un ou plusieurs fluides primaires enrichis en CO₂ (64, 66, 68, 70) à partir d'un fluide à traiter (40) constitué par des fumées industrielles comprenant du CO₂, au moins un composé plus volatil que le CO₂ et de l'eau industrielle (58), comprenant la séparation (109, 111) dudit fluide à traiter (40) en au moins ledit gaz pauvre en CO₂ (44) et au moins un fluide primaire riche en CO₂ (64, 66, 68, 70) ; et **caractérisé en ce qu'**il comprend une étape de refroidissement de ladite eau industrielle (58) par échange de chaleur dans une tour à contact direct (115) avec une fraction non nulle du gaz pauvre en CO₂ (50), de manière à obtenir ladite eau réfrigérée (36a).

2. Procédé selon la revendication 1, **caractérisé en ce qu'**il comporte en outre une étape c) où on réalise un échange de chaleur (105) entre une fraction non-nulle dudit fluide à traiter (32) et une fraction non-nulle de l'eau réfrigérée (36) produite à l'étape b), de manière à refroidir ledit fluide à traiter (32) préalablement à sa mise en oeuvre à l'étape a).

3. Procédé selon la revendication 2, **caractérisé en ce que**, à l'étape c), ledit échange de chaleur (105) se fait par contact direct.

4. Procédé selon la revendication 3, **caractérisé en ce qu'**il comprend en outre une étape c0) où ledit fluide à traiter (32), préalablement à sa mise en oeuvre à l'étape c), est refroidi par contact direct (105) avec un flux d'eau (34) ayant une température supérieure à la température humide de l'air ambiant.

5. Procédé selon l'une quelconque des revendications 2 à 4, **caractérisé en ce qu'**il comprend en outre une étape b1) où de l'eau réfrigérée (36a), produite à l'étape b), est refroidie dans un groupe frigorifique (119) préalablement à sa mise en oeuvre à l'étape c).

6. Procédé selon l'une quelconque des revendications 2 à 5, **caractérisé en ce qu'**il comprend en outre, postérieurement à sa mise en oeuvre à l'étape c) et préalablement à sa mise en oeuvre à l'étape a), une étape c1) de séchage dans une unité à adsorption (107) et/ou de compression (101a, 512) dudit fluide à traiter (38).

7. Procédé selon l'une quelconque des revendications 1 à 6, **caractérisé en ce que** l'étape a) est constituée des sous-étapes suivantes :
a1) un premier refroidissement (109) dudit fluide à traiter (40) par échange de chaleur sans changement d'état ;
a2) un second refroidissement (111) d'au moins une partie dudit fluide à traiter (42) refroidies à l'étape a) de manière à obtenir au moins un solide (62) comprenant majoritairement du CO₂ et au moins ledit gaz pauvre en CO₂ (44) ; et
a3) une étape comprenant la liquéfaction et/ou la sublimation d'au moins une partie dudit solide (62) et permettant d'obtenir lesdits un ou plusieurs fluides primaires riches en CO₂ (66, 68, 70).

## Patentansprüche

1. Verfahren zur Herstellung von gekühltem Wasser (36a), von mindestens einem CO₂-armen Gas (44) und von einem oder mehreren mit CO₂ angereicherten Primärfluiden (64, 66, 68, 70) ausgehend von einem zu behandelnden Fluid (40), das von industriellen Rauchgasen gebildet ist, die CO₂, mindestens eine flüchtigere Verbindung als CO₂ und Industriewasser (58) enthalten, das die Trennung (109, 111) des zu behandelnden Fluids (40) in mindestens das CO₂-arme Gas (44) und in mindestens ein CO₂-reiches Primärfluid (64, 66, 68, 70) umfasst; und **dadurch gekennzeichnet, dass** es einen Schritt der Kühlung des Industriewassers (58) durch Wärmeaustausch in einem Turm mit direktem Kontakt (115) mit einer Fraktion ungleich Null des CO₂-armen Gases (50) umfasst, derart, dass das gekühlte Wasser (36a) erhalten wird.

2. Verfahren nach Anspruch 1, **dadurch gekennzeichnet, dass** es ferner einen Schritt c) aufweist, bei dem ein Wärmeaustausch (105) zwischen einer Fraktion ungleich Null des zu behandelnden Fluids (32) und einer Fraktion ungleich Null des gekühlten Wassers (36), das in Schritt b) hergestellt wurde, durchgeführt wird, derart, dass das zu behandelnde Fluid (32) vor dessen Durchführung in Schritt a) gekühlt wird.

3. Verfahren nach Anspruch 2, **dadurch gekennzeichnet, dass**, in Schritt c), der Wärmeaustausch (105) durch direkten Kontakt erfolgt.

4. Verfahren nach Anspruch 3, **dadurch gekennzeichnet, dass** es ferner einen Schritt c0) umfasst, bei dem das zu behandelnde Fluid (32), vor dessen Durchführung in Schritt c), gekühlt wird durch direkten Kontakt (105) mit einem Wasserstrom (34) mit einer Temperatur, die höher als die Feuchttemperatur der Umgebungsluft ist.

5. Verfahren nach einem der Ansprüche 2 bis 4, **dadurch gekennzeichnet, dass** es ferner einen Schritt b1) umfasst, bei dem das gekühlte Wasser (36a), das in Schritt b) hergestellt wurde, vor dessen Durchführung in Schritt c) in einem Kühlanlage (119) gekühlt wird.

6. Verfahren nach einem der Ansprüche 2 bis 5, **dadurch gekennzeichnet, dass** es ferner, nach dessen Durchführung in Schritt c) und vor dessen Durchführung in Schritt a), einen Schritt c1) der Trocknung in einer Adsorptionseinheit (107) und/oder Verdichtungseinheit (101a, 512) des zu behandelnden Fluids (38) umfasst.

7. Verfahren nach einem der Ansprüche 1 bis 6, **dadurch gekennzeichnet, dass** Schritt a) aus den folgenden Teilschritten besteht:
a1) eine erste Kühlung (109) des zu behandelnden Fluids (40) durch Wärmeaustausch ohne Zustandsänderung;
a2) eine zweite Kühlung (111) mindestens eines Teils des zu behandelnden Fluids (42), die in Schritt a) gekühlt wurden, derart, dass mindestens ein Festkörper (62) erhalten wird, der überwiegend CO₂ und mindestens das CO₂-arme Gas (44) enthält; und
a3) einen Schritt, der die Verflüssigung und/oder die Sublimation mindestens eines Teils des Festkörpers (62) umfasst und es ermöglicht, das eine oder die mehreren CO₂-reichen Primärfluide (66, 68, 70) zu erhalten.

## Claims

1. Method for producing cold water (36a), at least one gas poor in CO₂ (44) and one or more primary fluids rich in CO₂ (64, 66, 68, 70) from a fluid that is to be treated (40) consisting of industrial fumes comprising CO₂, at least one compound that is more volatile than CO₂, and industrial water (58), comprising separating (109, 111) said fluid to be treated (40) into at least said gas poor in CO₂ (44) and at least one primary fluid rich in CO₂ (64, 66, 68, 70); and **characterised in that** it comprises a step of cooling said industrial water (58) by heat exchange in a direct contact tower (115) with a non-zero fraction of the gas poor in CO₂ (50), so as to obtain said cold water (36a).

2. Method according to claim 1, **characterised in that** it further comprises a step c) in which a heat exchange (105) is carried out between a non-zero fraction of the fluid to be treated (32) and a non-zero fraction of the cold water (36) produced in step b), so as to cool said fluid to be treated (32) prior to using it in step a).

3. Method according to claim 2, **characterised in that** in step c) the heat exchange (105) takes place by direct contact.

4. Method according to claim 3, **characterised in that** it further comprises a step c0) wherein, prior to being used in step c), said fluid to be treated (32) is cooled by direct contact (105) with a flow of water (34) the temperature of which is higher than the wet-bulb temperature of the ambient air.

5. Method according to any one of claims 2 to 4, **characterised in that** it further comprises a step b1) in which cold water (36a) produced in step b) is cooled in a cooling unit (119) prior to being used in step c).

6. Method according to any one of claims 2 to 5, **characterised in that** it further comprises, subsequently to being used in step c) and prior to being used in step a), a drying step c1) in an adsorption (107) and/or compression (101 a, 512) unit for said fluid to be treated (38).

7. Method according to any one of claims 1 to 6, **characterised in that** step a) is made up of the following subsidiary steps:
a1) a first cooling (109) of the fluid to be treated (40) by heat exchange without a change of state;
a2) a second cooling (111) of at least some of said fluid to be treated (42) cooled in step a) so as to obtain at least one solid (62) comprising predominantly CO₂ and at least said gas poor in CO₂ (44); and
a3) a step comprising the liquefaction and/or sublimation of at least some of said solid (62) and making it possible to obtain said one or more primary fluids rich in CO₂ (66, 68, 70).
